(19) Europäisches Patentamt European Patent Office Office européen des brevets

(11) **EP 3 906 394 B1**

(12) **EUROPEAN PATENT SPECIFICATION**

(45) Date of publication and mention of the grant of the patent:
**04.09.2024 Bulletin 2024/36**

(21) Application number: **20701136.2**

(22) Date of filing: **03.01.2020**

(51) International Patent Classification (IPC):
**G06Q 10/0832** (2023.01)   **G01F 23/00** (2022.01)
**F17C 11/00** (2006.01)   **F17C 13/08** (2006.01)

(52) Cooperative Patent Classification (CPC):
**G01F 23/00; F17C 11/007; F17C 13/083;**
**G06Q 10/0832;** F17C 2201/0109; F17C 2201/035;
F17C 2201/054; F17C 2205/0107;
F17C 2205/0126; F17C 2221/01; F17C 2221/035;
F17C 2223/0153; F17C 2223/033;
F17C 2250/0408; F17C 2250/0421;   (Cont.)

(86) International application number:
**PCT/EP2020/050078**

(87) International publication number:
**WO 2020/141215 (09.07.2020 Gazette 2020/28)**

(54) **TANK CONTAINER FOR TRANSPORTATION OF LIQUIFIED GAS**

TANKCONTAINER FÜR DEN TRANSPORT VON FLÜSSIGGAS

CONTENEUR-CITERNE POUR LE TRANSPORT DE GAZ LIQUÉFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.01.2019 EP 19150373**

(43) Date of publication of application:
**10.11.2021 Bulletin 2021/45**

(73) Proprietor: **Lysenkov, Andrey**
**Moscow, 125284 (RU)**

(72) Inventor: **Lysenkov, Andrey**
**Moscow, 125284 (RU)**

(74) Representative: **Luppi, Emanuele**
**Brunacci & Partners S.r.l.**
**Via Pietro Giardini, 625**
**41125 Modena (MO) (IT)**

(56) References cited:
EP-A1- 2 568 209       WO-A1-2009/147162
CN-A- 109 383 359      JP-A- 2006 160 287
US-A- 6 012 598        US-A1- 2015 321 834
US-A1- 2017 154 301    US-B1- 10 082 416
US-B2- 9 850 845

(52) Cooperative Patent Classification (CPC): (Cont.)
F17C 2250/043; F17C 2250/0439;
F17C 2250/0478; F17C 2250/0491;
F17C 2250/0495; F17C 2260/02; F17C 2270/0171;
F17C 2270/0173

## Description

This invention does concern a tank container for multimodal and/or intermodal transportation of hazardous cargoes that is integrated into a single automated safety and fiscal metering system for automatic measuring and transferring of the real-time data on the location, displacement and technical condition of the tank container, on quantity and physical condition of cargo, as well as for emergency detection and advance emergency warning purposes in case of cargo vent to atmosphere.

## State of the art

Currently known tank containers are not only used for transportation of such hazardous cargoes as liquefied petroleum gases, liquefied ammonia, and petrochemical products, but also for their interim storage. Furthermore, they allow their partial discharging when transferring the tank containers from one consumer to another through the chain. Safety plays a big role when it comes to transportation and storage of said substances. Presently, such tank containers hardly allow monitoring their content reliably and completely.

Presently, such tank containers are delivered by road, rail, and sea transport. Gas is one of the main types of energy products that is shipped from Russia and the CIS countries to Central and Western Europe. The average transportation leg is approx. 3,000 km.

International transportation of hazardous cargoes is subject to Rules, Conventions, and Codes, such as:

    1. The International Maritime Dangerous Goods Code (IMDG Code).
    2. Regulations concerning the International Carriage of Dangerous Goods by Rail (RID).
    3. The European Agreement concerning the International Carriage of Dangerous Goods by Road (ADR).
    4. The International Convention for Safe Containers (CSC).

Certain regulations are governing each specific transportation mode. However, still, no regulations are governing intermodal transportation. At the same time, there is no tank container allowing for automatically, online fiscal cargo metering and transferring information about the location of the tank container, its speed, displacement vector and cargo condition.

Existing tank containers, such as disclosed in CN 201 180 019, B65D 88/12, 14.01.2009, and SU 1502895, FO4C 13/00 CM, 23.08.1989 allow the transport of liquefied petroleum gases. However, they are not multipurpose ones, which greatly limits the potential for the use of such tank-containers in intermodal and multimodal cargo applications, especially in international transportation. Above all, such tank containers have no means to monitor the actual volume of hazardous cargo and its key physical parameters.

The tank container described in the inventor's certificate SU 1502895, F04C 13/00, 23.08.1989 has a reservoir which is fitted with a sensor for LPG liquid phase metering and is consider to reflect the closest state of the art in this respect.

But again, this tank container is not multimodal which greatly limits the potential for its use in intermodal (multimodal) cargo applications, especially in East-West international transportation. Further, it does not guarantee the current level of industrial and environmental safety, as it does not have any devices for monitoring key physical parameters such as temperature, pressure, density and their features.

The tank container according to EP 2 568 209 B1 and Russian Federation utility patent 110166 with the priority claim of RU2011125706 is the most advanced tank container at the moment. This tank container allows transporting such hazardous cargoes as liquefied petroleum gases, liquefied ammonia and also petrochemical products by rail, road, sea and onshore water transport. This container also allows loading/discharging at the existing top and bottom loading and discharging racks and is fitted with multiple liquid and vapor lines with shut-off valves. This tank container is a multipurpose one, as it allows loading/discharging at the existing top and bottom loading and discharging racks. Besides, it is fitted with the devices to meter and indicate the level and temperature of the liquid phase and the pressure in the reservoir.

However, the sensors and devices of said container allow to apply only visual methods to monitor physical parameters of hazardous cargo and only with personnel being located in close vicinity to the monitoring and metering devices, i.e. in the hazardous area, with the container in the immovable state. Such design of the tank container, **firstly,** does not allow for fiscal metering and automated real-time data transfer. **Secondly,** it does not allow for automated control and transfer of the real-time data on the changes in physical parameters of hazardous cargo. Thus, there is no possibility, not even a theoretical one, for early immediate response to and, what is even more important, for early prevention of a situation caused by equipment failure or emergency hazardous cargo venting to atmosphere when using such a tank container.

Presently, fiscal metering is done by measuring the flow of the liquid phase of LPG. Therefore, cubic meters and liters are being measured. This measurement data is accepted in retail sales, for example at gas stations, special gas carriers, and often does not consider, **firstly,** the thermal expansion factor that significantly affects the volume of the liquid phase, and, **secondly,** the mass of gas by-passed through a vapor return line. This significantly reduces the accuracy of measurements during fiscal metering and may result in a conflict between a supplier and a consumer.

The second measurement method used for fiscal metering is weighing. It is a widely accepted method used during liquified gas loading/discharging into and out of truck-tank containers and rail-tank containers. The mass of gas in the tank container is determined as a difference between the values measured before and after loading/discharging. This method allows calculating the mass of gas, including the vapor phase. The significant drawback of said method is that it cannot be used for fiscal metering, **firstly,** when partially discharging the liquified gas to several consumers, and, **secondly,** when several tank containers placed on the same flat car or trailer-truck have to be loaded/discharged. In this way, it can be said that both above methods have obvious technical lacks and drawbacks in the context of fiscal metering.

Until now, there have been lots of attempts to solve the urgent task of calculating the mass of content of the tank container, for example, an indirect static method that measures the level, pressure, average density, and average temperature of the liquid phase of LPG. The essence of the method is that the measured values allow for determination of the conditional component composition of the liquid and vapor phases of LPG, calculation of average density of the vapor phase of LPG, correction of the level of the liquid phase of LPG. Besides, the standard reference table for the reservoir allows the calculation of the volume and the mass of the liquid and the vapor phases of LPG Then, the total mass of LPG is calculated. The dynamic control of the nominal error in measurements, including calculation of the value of the nominal error in measurements, comparison of the same with the set value is performed automatically.

Known in the art is an indirect static method for measuring the mass of LPG wherein the mass M is determined according to the formula:

$$M = V \times \rho$$

where V is the volume of product in the reservoir, $\rho$ is the average density of product in the reservoir. The volume of liquid in the reservoir is measured using standard reference tables for reservoirs according to filling level values. However, LPG in the reservoir is a closed two-phase system, i.e. liquid phase - vapor phase. This leads to the necessity to determine both the mass of the liquid phase and the mass of the vapor phase according to the above formula. It should be noted that the change in temperature, pressure, component composition or quantity of LPG in the reservoir is followed by redistribution of LPG between the liquid and the vapor phases, which significantly complicates the measurement of the mass of LPG.

Known in the art are the methods for measuring the mass of LPG in the reservoir based on the measurement of the volume of the liquid phase of LPG with the help of the reference tables for reservoir and level sensors designed on the basis of capacitive and floating principles. These methods deliver a big error as a different amount of LPG can exist in vapor phase at a different temperature. Besides, the changes in LPG density deliver the errors in readings of the floating level sensor caused by the changes in the depth of immersion of the float in the liquid phase.

Known in the art is a non-invasive method for determining the liquid level and density inside the reservoir based on the use of an acoustic wave going along the walls of the vessel and measuring the phase difference from the sensor to the receiver. This method is described in patent US 6 053 041. When this method is used, measurements are not dependent on the form and the dimensions of the reservoir. Phase difference oscillations allow both measurement of the liquid level and density. However, this method has a major drawback - a low accuracy of measurements ($\pm 10$ kg/m$^3$) not allowing the use of the same for fiscal metering.

Known in the art are the methods for using differential pressure sensors to determine the volume and density of liquefied gases. For example, such a method is described in patent FR 2 811 752 (G01F 22/00) allowing the display of the liquid level in the reservoir with compressed gas. However, this method provides reliable measurements only in reservoirs with a regular geometrical shape, and that is a significant drawback. Another measurement method using a differential pressure sensor is described in patent US 6 944 570. This patent describes a differential pressure sensor determining the liquid and gas density value based on the measured pressure. However, these measurements will be valid only for single-component products.

Known in the art are attempts to achieve determination of the LPG level using the capacity methods. Such a method is described in the article Liquefied Petroleum Gas Level Control Using Capacitance Instruments authored by Atayanz, Peshchenko, Severin (Gazovaya Promyshlennost, 1997, #6, p. 25-28). According to this method, a vertical capacitance transducer in the form of a cylindrical capacitor partially filled with the controlled fluid is placed in a container with compressed gas. In these conditions, the degree of filling of the container with compressed gas is equal to the degree of submersion of the transducer therein. However, in essence, this method is just one of the ways to control the level of the liquid phase of LPG in the storage vessel, and, secondly, the design of the transducer allows using it solely on stationary vessels, but not on travelling tank containers.

The drawback of the said method has been removed by the computational method for determining the physical parameters of LPG in the container as per patent RU 2 262 667 authored by Sovlukov A.S. and Tereshin V.I. The method for determining the physical parameters of LPG in the vessel, as described in the above patent, allows determination of the mass, level, volume and density of the liquid and the vapor phases of LPG, when measuring the electric capacitance of the RF sensors with further joint functional transformation of the measured capacitances with due regard to geometrical dimensions of the particular vessel. However, this method has a low accuracy of mass measurement conditioned upon a number of significant drawbacks.

The first drawback is a low accuracy of level measurement. This is confirmed by the measuring system embodied using the above patent (СУ-5Д ТСЩ.000.115ТУ) according to the description of the measuring instrument type, registration 17792-04 dated October 26, 2004, approved by Mendeleev Russian Institute for Metrology (VNIIM), having the limit of the absolute intrinsic error in level measurements of $\pm 3$ mm, which will, consequently, result in a proportional error in mass measurements. The second drawback is a big error in density measurements, which make this method insufficiently accurate for fiscal metering.

Similar drawbacks are common to other currently known technical solutions using radio-frequency methods, e.g. a method for combining measurements of density and dielectric parameters to determine liquid volumes in containers as per patent GB 2 409 727 (G01V, 11/00) or a radio-frequency method for measuring liquid and gas density by determining integrated dielectric properties as per patent FI 00 102 014 (G01N, 22/00).

The selected prototype is the static method for measuring the liquid mass in the reservoir based on magnetostriction effect embodied in the STRUNA measuring system according to TU 4210-001-23434764-2004. This prototype has been selected as, according to the description of the measuring instrument type reg. No 28116-04 dated November 19, 2004. The limit of the tolerable absolute error in liquid level measurements is $\pm 1$ mm, and the limit of the absolute error in liquid density measurements is $\pm 1$ kg/m$^3$.

It is important to note an advantageous design of a densitometer for low-density liquids according to patent RU 2 308 019 (G01N, 9/10) embodied in the STRUNA measuring system. The said densitometer for low-density liquids contains a submerged balanced vertically-moving float in the form of a toroid with magnets inside, a float balancing device, a float displacement transducer in the form of a magnetostrictive waveguide and complemented by a pulse shaper and a signal processing unit. The temperature effect is automatically compensated by the special algorithm. This densitometer developed under the above said patent embodied in the STRUNA measuring system allows high accuracy of density measurements of the liquid phase of LPG. The detailed description of the work is provided in patents RU 2 138 028 (G01F 23/68, G01N 9/10, 1998) and RU 2 285 908 (G01F 23/68, G01N 9/10, 2005.)

The indirect static method for measuring the mass of liquid in the reservoir allows adequate measurement of the mass of the liquid phase in the reservoir, but does not consider the fact that LPG in the reservoir is a closed two-phase system, i.e. liquid phase - vapor phase.

As a result, direct use of this method for measuring the total mass of LPG in the tank containers leads to big errors in measurements unacceptable in fiscal metering.

The fact of the method error when using a float is mentioned in the above article On Systematic Errors in Metering of LPG in a Tank Farm authored by V. Tereshin, A. Sovlukov, A. Letunovsky, Avtogazozapravochny Kompleks Journal, No 5, 2006, is considered in patent RU 2 285 908 (G01F 23/68, G01N 9/10), and embodied in the prototype. However, it is only a part of the solution to reduce the value of the error.

Known in the art are options to install the pressure, temperature, and level sensors on the reservoirs, e.g. in the prototype, to control the pressure of the vapor phase of LPG In practice, sensors or manometers are installed in every container with LPG according to safety rules, but they are not used to calculate the density of the vapor phase of LPG.

Also, the prototype does not provide the ability to evaluate the value of the error in the process of measurements and possibilities to introduce the corrections, which will consider the changes in the level of the liquid phase under the influence of the external and internal factors during receipt and distribution, allowing achievement of the set value of the error in measurements in case of fiscal metering.

Therefore, such tank containers on which the methods as mentioned above are being applied do not allow the fiscal metering of cargo during full and partial loading/discharging, including data exchange in real-time and remote access mode. The methods exclude the possibility to control and transfer the data on the changes in the physical parameters in real-time mode and on the move as well, which are required for immediate response to a situation caused by partial emergency vent of the vapor phase of hazardous cargo to atmosphere, as well as for troubleshooting and advanced cargo leakage detection.

EP 2,568,209 discloses "The tank container for liquefied hydrocarbon gas transportation by a transportation means does comprise a reservoir (1) with the liquefied hydrocarbon gas level gauge filling and disharge duct stub (9) for liquefied hydrocarbon gas with shutoff valves placed in the bottom part of the reservoir. A branch pipe (8) for drainage of the liquefied hydrocarbon gas steam and gas phase with shutoff valves is placed in the top part of the reservoir. A safety valve (3) located in the top part of the reservoir (1). The reservoir (1) is equipped with asecond filling and discharge duct stub (6) with shutoff valves and with a second branch pipe (10) for drainage of the liquefied hydrocarbon gas steam and gas phase with shutoff valves. The filling and discharge duct stubs with shutoff valves and banch pipes for drainage of the liquefied hydrocarbon gas steam and gas phase with shutoff valves are grouped into two independent blocks where one of them is located in the top part of the reservoir, and the second one in the bottom part of the reservoir, accordingly. In the top and bottom part, lockable armature compartments (4,5) are arranged. The top compartment (4), the branch pipe (8) for drainage of liquefied hydrocarbon gas steam and gas phase with shutoff valves and the second filling and discharge duct stub (6) with shutoff valves is placed, and in the bottom compartement (5), the filling and discharge duct stub (9) with shutoff valves and the second branch pipe (10) for drainage of liquefied hydrocarbon gas steam and gas phase with shutoff valves is placed. The liquefied hydrocarbon gas level gauge is equipped with warning device (11) located in the bottom armature compartment (5), and the branch pipes (8, 10) for drainage of liquefied hydrocarbon gas steam and gas phase with shutoff valves are equipped with the pressure gauges(12, 13) mounted on them.The design of this thank container enables a quicker filling and discharging, and on top it allows to be connected to existing filling and discharge racks of different standards as used in the CIS countries on the one side, and in Western Europe and elsewhere on the other side. The high established saftety standards are neverthless being maintained. [sic]"

US 10,082,416 discloses, "An electronic liquid level gauge assembly includes an electronic display located in a housing connected to a tank. The display has first and second display portions for indicating liquid level condition. A first electronic sensor senses a change in magnetic field of a magnet associated with a liquid level transducer, with magnet rotation being proportional liquid level change. A processor determines a temperature-compensated liquid level condition by correlating the liquid level signal with temperature measurement of the liquid. A temperature-compensated vapor space can also be calculated based on tank information and properties of the liquid. Signals related to the temperature-compensated liquid level and vapor space are sent to the display and wirelessly transmitted to a smart phone or the like for remotely viewing the tank information. The smart phone also includes a special app for sending information, firmware updates, and display configuration data to the electronic gauge assembly."

JP 2006160287 discloses "an inexpensive tank truck and a mass control system thereof, which allow calculation of the mass of a liquified fuel gas in a tank...comprises a liquid level sensor 43 which measures the liquid level of the liquified fuel gas in the tank 13, a temperature sensor 42 which measures the temperature of a gas phase portion and of a liquid phase portion of the liquified fuel gas in the tank 13, an angle sensor 44 which measures the inclination of the tank 13 in the front-to-rear direction, and a controller 45 which executes a computation process on the basis of measurement data from each sensor. The controller 45 computes the gas density and liquid density of the liquified fuel gas on the basis of temperature data measured by the temperature sensor 42, computes the volume of the gas phase portion and the volume of the liquid phase portion on the basis of liquid level data from the liquid level sensor 43 and inclination data from the angle sensor 44, and computes the mass of the liquified fuel gas in the tank 13 from the computed density value and volume value."

## Task of Invention

In view of the many shortcomings of known tank containers as mentioned above, it is the task of this invention to develop a General-Purpose Multimodal Transportation Container (GPMTC) for transportation of hazardous cargoes by rail, road, and sea with an intermodality function and a possibility for automatic online fiscal metering of cargo, including when partially loading/discharging. The GPMTC shall also transfer the data on its location, speed, displacement vector, misalignment of its base with the horizontal plane, performance of the main production operations, and control automatically and transfer the current values and rate of change in such cargo parameters as the total mass, pressure, temperature, density of the liquid and vapor phases. As a result, such a GPMTC ensures "transparent" cargo handling during fiscal metering and customs clearance and optimizes logistics.

## Solution according to the invention

A tank container according to the present invention is defined in appended independent claim 1.

Such a GPMTC is completely autonomous anywhere in the world and represents an innovative system for remote fiscal metering and control of liquefied petroleum gases. Loading, unloading, and telemetry, providing metering at any place is the most important thing for the operation of tank container and this equipment and the timeline in real time and place including start of loading - end of loading, - time, start of unloading - end of unloading, and time. Sensors are triggered for closing and opening of the circuit when the valves are opened and closed. Everything happens in real time and place. For the first time, this intermodal tank container for rail, road and sea transport is equipped with the required and sufficient amount of automatic data collection devices, combined with a telemetric system for collection and transmission of the information on the condition of hazardous cargo, and in an optional execution even of the physical condition of components of the tank container and possible emergencies, and it uses the standardized measuring and calculation method for fiscal metering of hazardous cargo when loading, transporting, interim storing and discharging in real time.

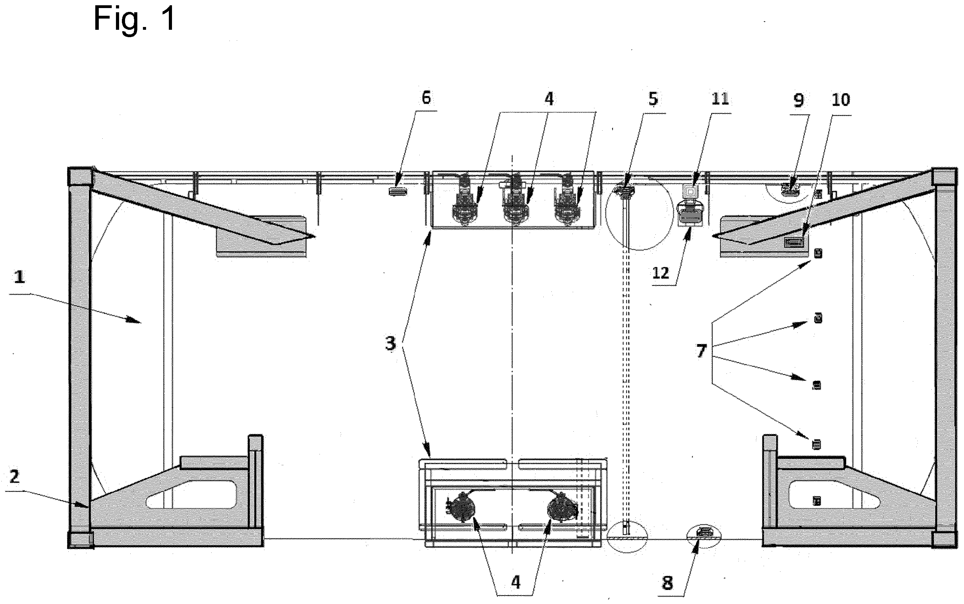

The design of the GPMTC is shown in Figure 1 by way of example. In the following, this GPMTC will be described along this figure 1 in more detail and its functionality will be explained.

Figure 1  Elevation drawing of the General-Purpose Multimodal Transportation Container (GPMTC) with the respective components.

A reservoir 1 for a liquified petroleum gas is integrated in a load-bearing frame 2, which is fitted with the corner fittings. Loading/discharging is performed through the liquid phase LP and vapor phase VP lines with the valves 4 enclosed in the valve cabinets 3. Loading, unloading, and telemetry, providing metering at any place is the most important thing for the operation of tank container and this equipment and the timeline in real time and place including start of loading - end of loading, - time, start of unloading - end of unloading, and time. There are sensors which are triggered for closing and opening of the circuit when the valves are opened and closed. Everything happens in real time and place. These sensors and telemetry equipment are triggered when the circuit is closed and opened at the moment of opening and closing of the GPMTC's shut-off valves. The valves may be operated by hand by an operator after having established the connection between the charge or discharge line and the valve. In another execution, the valves may be remote controlled by electrical servo-motors. Eventually, these sensors provide measurement data which allow in real time and anywhere in the world to carry out metering and to calculate the mass of gas, taking into consideration the vapor phase, at the beginning and end of the cargo operations with accuracy meeting the requirements of commercial metering. For the first time, this intermodal tank container for rail, road and sea transport is equipped with the required and sufficient amount of automatic data collection devices, combined with a telemetric system for collection and transmission of the information on the condition of hazardous cargo, and in an optional execution even of the physical condition of components of the tank container and possible emergencies, and it uses the standardized measuring and calculation method for fiscal metering of hazardous cargo when loading, transporting, interim storing and discharging in real time. These devices and sensors will be described in more detail in the following sections. Such a GPMTC is completely autonomous anywhere in the world and represents an innovative system for remote fiscal metering and control of liquified petroleum gases.

The GPMTC is fitted with a liquid phase level sensor 5, a pressure sensor 6, a liquid phase density sensor 8, a vapor phase density sensor 9, and several temperature sensors 7 installed at several control points. The measuring elements of the sensors are located inside the vessel, while the connections of the sensors 5-9 to the communication lines are located outside the reservoir 1.

A unit 10, controlling the location and the displacement vector of the tank container in three-dimensional space, includes gyros and accelerometers and allows defining the GPMTC's displacement vector and misalignment of its base with the horizontal plane.

To calculate the volume of liquified gas, the mass of liquid, the mass of vapor, the total mass of liquified gas in the reservoir 1, the GPMTC is fitted with the liquid phase level sensor 5 installed downright and passing through the vertical centerline and the horizontal centerline of the graduated reservoir. The GPMTC is fitted with a pressure sensor 6, a liquid phase density sensor 8, a vapor phase density sensor 9 and temperature sensors 7 installed at several, at least six, control points. The measuring elements of the sensors are located inside the vessel, while the connections of the sensors to the communication lines are located outside. The GPMTC is fitted with the set unit 10 of sensors, containing the gyros and the accelerometers to determine the GPMTC's displacement vector, control the position of the GPMTC's base against the horizontal plane, and introduce a compensation value to the readings of the liquid phase level sensor that improves level measurement accuracy. All sensors are combined into a unified communication and data exchange network and are connected via an interface converter and an Intrinsic Safety barrier to a Central System Unit 11 with an independent power supply, a controller, a memory card, a GPS sensor and a transmit/receive IRIDIUM-GSM antenna unit 12 for data communication and signaling via a satellite system or GSM network. The Central System Unit 11 is used to collect, process, calculate, and transfer data and is provided with a function of data collection from the external devices. The Central System Unit 11 can be fitted with a removable memory card, which is used to back up all material telemetry data for one/two past years.

The tank container is fitted with the following items not designated in the figure:

- Cable lines connecting the sensors to a Central System Unit 11.
- Cable lines, interface converter and connectors to transfer the data to a Central System Unit 11 from the external devices.
- Intrinsic Safety Barrier.

When designing and manufacturing the GPMTC, all international rules and regulations governing the transportation of hazardous cargoes in tank containers as well as the regulations related to oil, gas, and chemical industries were considered. This GPMTC fully complies with the requirements of the international Rules, Conventions, Codes and Treaties governing the transportation of hazardous cargoes.

In this way, upon request, this GPMTC can transfer the real-time data on its actual location, speed and displacement vector, the slope angle of its base, as well as on loading/discharging operations and self-test results. Besides, it can transfer the real-time data on the changes in pressure, temperature and mass of hazardous cargo resulting from loading/discharging, and in an optional execution, it can also detect the emergency vapor vent to atmosphere or leakage. Timely transferred information allows avoiding or warning in advance of possible emergencies, such as partial vapor phase discharging to atmosphere, loss of containment and fire.

For the first time, this intermodal tank container for rail, road and sea transport is equipped with the required and sufficient amount of automatic data collection devices, combined with a telemetric system for collection and transmission of the information on the condition of hazardous cargo, the physical condition of components of the tank container and possible emergencies, and it uses the standardized measuring and calculation method for fiscal metering of hazardous cargo when loading, transporting, interim storing and discharging in real time.

A key advantage of this GPMTC is that it can independently measure the mass of cargo with a high degree of accuracy required and sufficient for fiscal metering and customs clearance. Thus, the invention solves the main problem with the application of the tank containers in intermodal and/or multimodal transportation of liquified petroleum gases, which does not allow to apply the dynamic scales on the railroad for fiscal metering and customs clearance due to the transportation of two or three tank containers on a single flat car. This transportation mode does not allow weighing of containers separately before or after loading/discharging.

The static method is used to measure the total (sum) mass of cargo in the GPMTC, allowing measuring the level of the liquid phase, the density of the liquid phase and the temperature of the liquid phase. Then, the volume of the liquid phase and the volume of the vapor phase are calculated in accordance with the measured level, using the reference tables for the reservoir and the correction value for misalignment of the GPMTC's base with the horizontal plane. Based on the obtained data, the mass of the liquid phase is calculated as the product of the volume and the density of the liquid phase. Simultaneously, the pressure inside the reservoir and the temperature of the vapor phase is measured, and the density of the vapor phase is calculated. The mass of the vapor phase and the total (sum) mass of cargo is calculated as the sum of the masses of the liquid phase and the vapor phase. Control of the relative error in measurements and comparison of the same with the set value is performed automatically.

The technical result is the online measurement of the total (sum) mass of cargo, including during the partial loading/discharging operations, with a degree of accuracy required and sufficient for fiscal metering and customs clearance.

Applicant has developed a prototype of the here disclosed GPMTC, with which the claimed method is used to measure the total (sum) mass of the liquified petroleum gases, liquefied ammonia and petrochemical products. The test results fully confirmed the correctness of the suggested solution and high accuracy of measurements, even exceeding the ones required and sufficient for fiscal metering.

As a result, the GPMTC provides a high degree of accuracy of the calculated mass of cargo loaded, discharged or transported in the GPMTC. Calculation of the exact mass of cargo is ensured by the introduction of the correction value for the readings provided by the liquid phase level sensor. The correction value is introduced by the set of gyros and accelerometers that detect misalignment of the GPMTC's base with the horizontal plane. Besides the set of gyros and accelerometers detects the displacement vector of the GPMTC in the three-dimensional space. Furthermore, the GPMTC is fitted with a GPS sensor used to detect the geographical location and the speed of the object, and further fitted with telemetry equipment based on the IRIDIUM system and GSM networks.

The GPMTC transfers the real-time data on its actual location, deviation from the route, velocity, displacement vector, slope angle, as well as information on loading/discharging operations and self-test results. Furthermore, the real-time data on the changes in pressure, temperature, or mass of hazardous cargo resulted from loading/discharging operations, emergency vapor vent or leakage is transmitted. Timely delivered information allows either to prevent an emergency or to warn of such situations as emergency partial vapor phase vent to atmosphere, loss of containment and fire.

**Advantages of the invention**

This General-Purpose Multimodal Transportation Container (GPMTC) offers the following advantages over the known tank containers:

A) When computing the exact mass of cargo in the GPMTC, a calculation method that considers the mass of the vapor phase is used. The application of this method is conditioned by the availability of pressure, temperature, liquid phase, and vapor phase density sensors, specifically placed electronic level sensor, as well as the set of sensors with gyros and accelerometers that allow to introduce a compensation value when the GPMTC's base misaligns with the horizontal plane and accurately calculate the volume of liquid and vapor phases.

B) The reservoir of every GPMTC is calibrated in a specific manner, considering the volume and the level of liquid, which, being combined with the required quantity of density, pressure, temperature sensors and correctly placed level sensor, with the correction value from the set of gyros and accelerometers, allows measuring and calculating the mass of cargo with the degree of accuracy required and sufficient for fiscal metering and custom clearance.

C) All information received by the GPMTC's Central System Unit due to the application of telemetry and IRIDIUM+GSM equipment is available anytime and anywhere worldwide (100% coverage).

D) GPS-GLONASS-GALILEO equipment allows determining the actual location and the speed of the GPMTC at any time, while the gyro and the accelerometers allow detecting the displacement vector during the transportation and handling operations and misalignment of the GPMTC's base from the horizontal plane.

E) Installed equipment is also activated in the case of emergencies or possible emergencies such as partial vapor phase vent to atmosphere, loss of containment and fire. In combination with a GPMTC's traffic schedule and scheduled cargo load/discharging operations used by the interested parties, obtained information allows responding promptly and taking all necessary measures to prevent, warn and eliminate consequences of emergencies. As a result, the General-Purpose Multimodal Transportation Container (GPMTC) ensures an improved safety that cannot be achieved with any so far known tank containers.

F) 100% control of the GPMTC's traffic, its geographical location, start and completion of loading/discharging operations, change in transportation mode allow eliminating or reducing significantly the costs associated with GPMTC location at interim storage sites, including when composing a shipload or a railroad train.

In summary, the technical innovation of the intermodal tank container is the presence of the fundamentally new system for fiscal metering coupled with monitoring of cargo condition and control of its actual location, allowing to transfer data online via the satellite system. The multi-purpose and transparent international LPG metering and control system is added to the principle of intermodal transportation of gas. The solution of this general-purpose tank container combines three principles: 1. Intermodality, 2. The computational method for determining the total mass of gas (including the liquid and vapor phases) and 3. Telemetry. The usage of this solution creates a fundamentally different vehicle for transportation of liquified petroleum gas, which ensures its control in real time, anywhere and anytime. The new tank container is both a multi-purpose vehicle and a multi-purpose system for measuring, metering and control of LPG and other products.

**List of Numerals:**

1. Graduated reservoir
2. Frame components
3. Valve cabinet
4. Liquid phase (LP) and vapor phase (VP) lines with shut-off valves
5. Liquid phase level sensor
6. Pressure sensor
7. Temperature sensors

8. Liquid phase density sensor
9. Vapor phase density sensor
10. Position (inclination) sensing and displacement vector detecting unit (accelerometers and gyro)
11. Central system unit (CSU) with independent power supply
12. GPS-IRIDIUM-GSM antenna unit

**Claims**

1. A tank container used as a reservoir ( 1) for transportation and storage of hazardous cargoes on rail, on road or on sea, in particular liquified petroleum gases, liquified ammonia and also petrochemical products, said container including loading/discharging valves (4) for the liquid phase (LP) and vapor phase (VP) lines, wherein said container is designed as a General-Purpose Multimodal Transportation Container (GPMTC) fitted with several industrial sensors (5-9) in an interior of said container for detecting and triggering a closing and an opening of a circuit when the valves (4) are opened and closed, said several industrial sensors including at least:

   • a sensor (5) for measuring liquid phase level,
   • a sensor (6) for measuring pressure,
   **characterized in that** said several industrial sensors further include:

   • a sensor (8) for measuring liquid phase density,
   • a sensor (9) for measuring vapor phase density, and
   • a plurality of temperature sensors (7),

   said sensors equipped with connection lines to the outside of the reservoir (1), and said container further equipped with:

   • a unit (10) comprising gyros and accelerometers for determining the location and a displacement vector of the tank GPMTC in a three-dimensional space and a misalignment of a base of said container relative to a horizontal plane, and
   • metrology and telemetry devices for real-time transferring of measured data worldwide, such data firstly based on a volume of cargo for fiscal metering purposes, and secondarily based on the location and displacement of the tank container for logistics purposes,

   wherein said liquid phase level sensor (5) is installed downright and passes through a vertical centerline and a horizontal centerline of the reservoir,

wherein said pressure sensor (6), said liquid phase density sensor (8), said vapor phase density sensor (9) and said plurality of temperature sensors (7) are installed at respective control points, for measuring key physical parameters such as pressure, density of the liquid and vapor phases, temperature of the liquid and vapor phases,

wherein said gyros and the accelerometers are configured for introducing a correction value into the readings obtained by the liquid phase level sensor (5) by considering the GPMTC displacement vector and the misalignment of the base relative to the horizontal plane by a computing Central System Unit (11 ), and for accurately determining the mass of loaded, discharged, and transported cargo in the reservoir (1 ), whereby data obtained by the sensors (5-9) are fed into a unified communication and data exchange network and are connected via an interface converter and an Intrinsic Safety Barrier to the Central System Unit (11 ), said Central System Unit powered by an independent power supply, and wherein said container is further equipped with a controller, a memory card, a GPS sensor, and a transmit/receive IRIDIUM-GSM antenna unit (12) for data collecting, processing, calculating, transferring and signaling via a satellite system or GSM networks, for determining the location of the GPMTC anytime, and an interface for transmission of the obtained geographical data, including actual speed and direction.

2. A tank container according to claim 1, further comprising sensors for determining a technical condition of the tank container and a physical condition of the cargo, and an emergency vapor vent to atmosphere or any leakage for early warning and allowing timely actions in case of emergencies.

3. A tank container according to either one of the preceding claims, wherein said container is fitted with a removable memory card for backing up all collected data including telemetry data for a period of time ranging from one year to two years.

4. A tank container according to claim 3, wherein said container is configured for automatic calculation of a total mass of liquified gas transported in the tank container, including the liquid and vapor phases, with an accuracy required and sufficient for fiscal metering and custom clearance, determining the changes in the mass of gas when loading and discharging that allows abandoning additional operations using external metering devices such as volumetric flowmeters and weights and remaining autonomous anywhere, as well as handling cargo efficiently and safely, and all necessary equipment for online telemetry data exchange anywhere in the world.

5. A tank container according to claim 1, wherein said memory card is a removable memory card configured for backing up all collected data including telemetry data for a period of time ranging from one year to two years.

6. A tank container according to claim 1, wherein said container is configured for automatic calculation of a total mass of liquified gas transported in the tank container, including the liquid and vapor phases, with an accuracy required and sufficient for fiscal metering and custom clearance, determining changes in the mass of gas when loading and discharging that allows abandoning additional operations using external metering devices such as volumetric flowmeters and weights and remaining autonomous anywhere, as well as handling cargo efficiently and safely, and all necessary equipment for online telemetry data exchange anywhere in the world.

7. A tank container according to claim 2, wherein said container is configured for automatic calculation of a total mass of liquified gas transported in the tank container, including the liquid and vapor phases, with an accuracy required and sufficient for fiscal metering and custom clearance, determining changes in the mass of gas when loading and discharging that allows abandoning additional operations using external metering devices such as volumetric flowmeters and weights and remaining autonomous anywhere, as well as handling cargo efficiently and safely, and all necessary equipment for online telemetry data exchange anywhere in the world.

**Patentansprüche**

1. Tankcontainer, der als Behälter (1) für den Transport und die Lagerung gefährlicher Frachten auf der Schiene, auf der Straße oder auf See verwendet wird, insbesondere verflüssigte Erdölgase, verflüssigtes Ammoniak und auch petrochemische Produkte, wobei der Container Lade-/Entladeventile (4) für die Flüssigphasen- und Dampfphasenleitungen (LP- und VP-Leitungen) aufweist, wobei der Container als Mehrzweck-Multimodaltransportcontainer (GPMTC) ausgebildet ist, der mit mehreren industriellen Sensoren (5 bis 9) in einem Inneren des Containers ausgestattet ist, um ein Schließen und Öffnen eines Kreislaufs zu erkennen und auszulösen, wenn die Ventile (4) geöffnet und geschlossen werden, wobei die mehreren industriellen Sensoren mindestens Folgendes umfassen:

- einen Sensor (5) zum Messen des Füllstands der Flüssigphase,

- einen Sensor (6) zum Messen von Druck, **dadurch gekennzeichnet, dass** die mehreren industriellen Sensoren ferner Folgendes beinhalten:

    - einen Sensor (8) zum Messen der Flüssigphasendichte,
    - einen Sensor (9) zum Messen der Dampfphasendichte und
    - eine Vielzahl von Temperatursensoren (7),

wobei die Sensoren mit Verbindungsleitungen zur Außenseite des Behälters (1) ausgestattet sind und der Behälter ferner ausgestattet ist mit:

    - einer Einheit (10), die Kreisel und Beschleunigungsmesser umfasst, um die Position und einen Verschiebungsvektor des GPMTC-Tanks in einem dreidimensionalen Raum und eine Fehlausrichtung eines Bodens des Behälters relativ zu einer horizontalen Ebene zu bestimmen, und
    - Mess- und Telemetriegeräte zur Echtzeitübertragung von Messdaten weltweit, die zum einen auf einem Frachtvolumen für fiskale Messzwecke und zum anderen auf dem Standort und der Bewegung des Tankcontainers für logistische Zwecke basieren,

wobei der Flüssigphasenfüllstandssensor (5) gerade installiert ist und durch eine vertikale Mittellinie und eine horizontale Mittellinie des Behälters verläuft,
wobei der Drucksensor (6), der Flüssigphasendichtesensor (8), der Dampfphasendichtesensor (9) und die Vielzahl von Temperatursensoren (7) an jeweiligen Kontrollpunkten installiert sind, um wichtige physikalische Parameter wie Druck, Dichte der Flüssig- und Dampfphase, Temperatur der Flüssig- und Dampfphase zu messen,
wobei die Kreisel und die Beschleunigungsmesser ausgebildet sind, um unter Berücksichtigung des GPMTC-Verschiebungsvektors und der Fehlausrichtung der Basis relativ zur horizontalen Ebene durch eine Rechenzentralsystemeinheit (11) einen Korrekturwert in die vom Flüssigphasenfüllstandssensor (5) erhaltenen Messwerte einzuführen und die Masse der geladenen, entladenen und transportierten Ladung im Behälter (1) genau zu bestimmen, wobei die von den Sensoren (5 bis 9) erhaltenen Daten in ein einheitliches Kommunikations- und Datenaustauschnetzwerk eingespeist und über einen Schnittstellenwandler und eine intrinsische Sicherheitsbarriere mit der Zentralsystemeinheit (11) verbunden werden, wobei die Zentralsystemeinheit von einer unabhängigen Stromversorgung gespeist wird, und
wobei der Behälter ferner mit einer Steuerung, einer Speicherkarte, einem GPS-Sensor und einer Sende-/Empfangs-IRIDIUM-GSM-Antenneneinheit (12) zum Sammeln, Verarbeiten, Berechnen, Übertragen und Signalisieren von Daten über ein Satellitensystem oder GSM-Netzwerke, um den Standort des GPMTC jederzeit zu bestimmen, und einer Schnittstelle zum Übertragen der erhaltenen geografischen Daten, einschließlich der tatsächlichen Geschwindigkeit und Richtung, ausgestattet ist.

2. Tankcontainer nach Anspruch 1, ferner umfassend Sensoren zum Bestimmen eines technischen Zustands des Tankcontainers und eines physischen Zustands der Fracht und eine Notdampfentlüftung in die Atmosphäre oder eine Leckage zur Frühwarnung und zum Ermöglichen rechtzeitiger Maßnahmen im Falle von Notfällen.

3. Tankcontainer nach einem der vorhergehenden Ansprüche, wobei der Behälter mit einer entfernbaren Speicherkarte zum Sichern aller gesammelten Daten, einschließlich Telemetriedaten, für einen Zeitraum von einem Jahr bis zu zwei Jahren ausgestattet ist.

4. Tankcontainer nach Anspruch 3, wobei der Container für die automatische Berechnung einer Gesamtmasse an verflüssigtem Gas, das in dem Tankcontainer transportiert wird, einschließlich der Flüssig- und Dampfphase, mit einer Genauigkeit ausgebildet ist, die für die fiskale Dosierung und Zollabfertigung erforderlich und ausreichend ist, wobei die Änderungen der Gasmasse beim Laden und Entladen bestimmt werden, die es ermöglichen, zusätzliche Vorgänge unter Verwendung externer Dosiervorrichtungen, wie Volumenstrommesser und Gewichte, aufzugeben und überall autonom zu bleiben, sowie Fracht effizient und sicher zu handhaben, und alle notwendigen Geräte für den Online-Telemetriedatenaustausch überall auf der Welt.

5. Tankcontainer nach Anspruch 1, wobei die Speicherkarte eine entfernbare Speicherkarte ist, die zum Sichern aller gesammelten Daten, einschließlich Telemetriedaten, für einen Zeitraum von einem Jahr bis zu zwei Jahren ausgebildet ist.

6. Tankcontainer nach Anspruch 1, wobei der Container zur automatischen Berechnung einer Gesamtmasse an verflüssigtem Gas, das in dem Tankcontainer transportiert wird, einschließlich der Flüssig- und Dampfphase, mit einer Genauigkeit ausgebildet ist, die für eine fiskale Messung und Zollabfertigung erforderlich und ausreichend ist, wobei Änderungen in der Gasmasse beim Laden und Entladen bestimmt werden, die es ermöglichen, zusätzliche Vorgänge unter Verwendung externer Messvorrichtungen wie volumetrischer Durchflussmesser und Gewichte aufzugeben und überall autonom zu bleiben sowie Fracht effizient und sicher zu handhaben, und alle notwendigen Geräte für den Online-Telemetriedatenaustausch überall auf der Welt.

**7.** Tankcontainer nach Anspruch 2, wobei der Container zur automatischen Berechnung einer Gesamtmasse an verflüssigtem Gas, das in dem Tankcontainer transportiert wird, einschließlich der Flüssig- und Dampfphase, mit einer Genauigkeit ausgebildet ist, die für eine fiskale Messung und Zollabfertigung erforderlich und ausreichend ist, wobei Änderungen in der Gasmasse beim Laden und Entladen bestimmt werden, die es ermöglichen, zusätzliche Vorgänge unter Verwendung externer Messvorrichtungen wie volumetrischer Durchflussmesser und Gewichte aufzugeben und überall autonom zu bleiben sowie Fracht effizient und sicher zu handhaben, und alle notwendigen Geräte für den Online-Telemetriedatenaustausch überall auf der Welt.

## Revendications

**1.** Conteneur-citerne utilisé comme réservoir (1) pour le transport et le stockage de cargaisons dangereuses sur rail, sur route ou sur mer, en particulier des gaz de pétrole liquéfiés, de l'ammoniac liquéfié et également des produits pétrochimiques, ledit conteneur comprenant des vannes (4) de chargement/déchargement pour les lignes en phase liquide (LP) et en phase vapeur (VP), dans lequel ledit conteneur est conçu comme un conteneur de transport multimodal polyvalent (GPMTC) équipé de plusieurs capteurs industriels (5 à 9) à l'intérieur dudit conteneur pour détecter et déclencher une fermeture et une ouverture d'un circuit lorsque les vannes (4) sont ouvertes et fermées, lesdits plusieurs capteurs industriels comprenant au moins :

    - un capteur (5) pour mesurer le niveau de phase liquide,
    - un capteur (6) pour mesurer la pression, **caractérisé en ce que** lesdits plusieurs capteurs industriels comprennent en outre :

        - un capteur (8) pour mesurer la densité de phase liquide,
        - un capteur (9) pour mesurer la densité de phase vapeur, et
        - une pluralité de capteurs (7) de température,

    lesdits capteurs étant équipés de lignes de liaison à l'extérieur du réservoir (1), et ledit conteneur étant en outre équipé :

    - d'une unité (10) comprenant des gyroscopes et des accéléromètres pour déterminer l'emplacement et un vecteur de déplacement du GPMTC citerne dans un espace tridimensionnel et un désalignement d'une base dudit conteneur par rapport à un plan horizontal, et
    - de dispositifs de métrologie et de télémétrie pour le transfert en temps réel de données mesurées dans le monde entier, de telles données étant basées d'une part sur un volume de cargaison à des fins de comptage fiscal, et d'autre part sur l'emplacement et le déplacement du conteneur-citerne à des fins logistiques,

dans lequel ledit capteur de niveau de phase liquide (5) est installé à la verticale et traverse une ligne centrale verticale et une ligne centrale horizontale du réservoir,
dans lequel ledit capteur (6) de pression, ledit capteur (8) de densité de phase liquide, ledit capteur (9) de densité de phase vapeur et ladite pluralité de capteurs (7) de température sont installés à des points de contrôle respectifs, pour mesurer des paramètres physiques clés tels que la pression, la densité des phases liquide et vapeur, la température des phases liquide et vapeur,
dans lequel lesdits gyroscopes et les accéléromètres sont configurés pour introduire une valeur de correction dans les lectures obtenues par le capteur de niveau (5) de phase liquide en prenant en compte le vecteur de déplacement du GPMTC et le désalignement de la base par rapport au plan horizontal par une unité de système centrale (11) de calcul, et pour déterminer avec précision la masse de la cargaison chargée, déchargée et transportée dans le réservoir (1), moyennant quoi des données obtenues par les capteurs (5 à 9) sont introduites dans un réseau de communication et d'échange de données unifié et connectées via un convertisseur d'interface et une barrière de sécurité intrinsèque à l'unité de système centrale (11), ladite unité de système centrale étant alimentée par une alimentation électrique indépendante, et
dans lequel ledit conteneur est en outre équipé d'un dispositif de commande, d'une carte mémoire, d'un capteur GPS et d'une unité d'antenne IRIDIUM-GSM d'émission/réception (12) pour la collecte, le traitement, le calcul, le transfert et la signalisation de données via un système satellite ou des réseaux GSM, pour déterminer l'emplacement du GPMTC à tout moment, et d'une interface pour la transmission des données géographiques obtenues, y compris la vitesse et la direction réelles.

2. Conteneur-citerne selon la revendication 1, comprenant en outre des capteurs pour déterminer un état technique du conteneur-citerne et un état physique de la cargaison, et une évacuation de vapeur d'urgence vers l'atmosphère ou toute fuite pour alerter précocement et permettre des actions en temps opportun en cas d'urgence.

3. Conteneur-citerne selon l'une quelconque des revendications précédentes, dans lequel ledit conteneur est équipé d'une carte mémoire amovible pour sauvegarder toutes les données collectées, y compris les données de télémétrie, pendant une période de temps allant d'un an à deux ans.

4. Conteneur-citerne selon la revendication 3, dans lequel ledit conteneur est configuré pour le calcul automatique d'une masse totale de gaz liquéfié transporté dans le conteneur-citerne, y compris les phases liquide et vapeur, avec une précision requise et suffisante pour le comptage fiscal et le dédouanement, la détermination des changements dans la masse de gaz lors du chargement et du déchargement qui permet d'abandonner des opérations supplémentaires utilisant des dispositifs de comptage externes tels que des débitmètres et des poids volumétriques et de rester autonome n'importe où, ainsi que la manipulation de la cargaison de manière efficace et sûre, et tout l'équipement nécessaire pour l'échange de données de télémétrie en ligne n'importe où dans le monde.

5. Conteneur de réservoir selon la revendication 1, dans lequel ladite carte mémoire est une carte mémoire amovible configurée pour sauvegarder toutes les données collectées, y compris les données de télémétrie, pendant une période de temps allant d'un an à deux ans.

6. Conteneur-citerne selon la revendication 1, dans lequel ledit conteneur est configuré pour le calcul automatique d'une masse totale de gaz liquéfié transporté dans le conteneur-citerne, y compris les phases liquide et vapeur, avec une précision requise et suffisante pour le comptage fiscal et le dédouanement, la détermination de changements dans la masse de gaz lors du chargement et du déchargement qui permet d'abandonner des opérations supplémentaires en utilisant des dispositifs de comptage externes tels que des débitmètres volumétriques et des poids et de rester autonome n'importe où, ainsi que la manipulation de la cargaison de manière efficace et sûre, et tout l'équipement nécessaire pour l'échange de données de télémétrie en ligne n'importe où dans le monde.

7. Conteneur-citerne selon la revendication 2, dans lequel ledit conteneur est configuré pour le calcul automatique d'une masse totale de gaz liquéfié transporté dans le conteneur-citerne, y compris les phases liquide et vapeur, avec une précision requise et suffisante pour le comptage fiscal et le dédouanement, la détermination de changements dans la masse de gaz lors du chargement et du déchargement qui permet d'abandonner des opérations supplémentaires en utilisant des dispositifs de comptage externes tels que des débitmètres volumétriques et des poids et de rester autonome n'importe où, ainsi que la manipulation de la cargaison de manière efficace et sûre, et tout l'équipement nécessaire pour l'échange de données de télémétrie en ligne n'importe où dans le monde.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201180019
- SU 1502895
- EP 2568209 B1
- RU 110166
- RU 2011125706
- US 6053041 A
- FR 2811752
- US 6944570 B
- RU 2262667, Sovlukov A.S. and Tereshin V.I.
- GB 2409727 A
- FI 00102014
- RU 2308019
- RU 2138028
- RU 2285908
- EP 2568209 A
- US 10082416 B
- JP 2006160287 B

### Non-patent literature cited in the description

- **ATAYANZ ; PESHCHENKO ; SEVERIN.** Liquefied Petroleum Gas Level Control Using Capacitance Instruments authored. *Gazovaya Promyshlennost,* 1997, (6), 25-28
- **V. TERESHIN ; A. SOVLUKOV ; A. LETUNOVSKY.** On Systematic Errors in Metering of LPG in a Tank Farm. *Avtogazozapravochny Kompleks Journal,* 2006, (5